# EUROPEAN PATENT SPECIFICATION

(11) **EP 2 285 647 B1**
(45) Date of publication and mention of the grant of the patent: **12.10.2011**
(21) Application number: 09753593.4
(22) Date of filing: 16.04.2009
(51) Int. Cl.: B62D 33/073, F16H 61/36

(54) **GEAR SHIFT SYSTEM**
GANGSCHALTUNGSSYSTEM
SYSTÈME DE CHANGEMENT DE VITESSE

(30) Priority: 28.05.2008 WO PCT/EP2008/004249
(43) Date of publication of application: 23.02.2011
(73) Proprietor: Kongsberg Automotive AB, 56528 Mullsjö (SE)
(72) Inventor: MELANDER, Ingemar, S-565 93 Mullsjö (SE); PETERSSON, Joakim, S-55333 Jönsköping (SE)
(74) Representative: UEXKÜLL & STOLBERG
(86) International application number: PCT/EP2009/002801
(87) International publication number: WO 2009/143938

(56) References cited:
- EP-B- 0 084 239
- JP-A- 9 303 367
- JP-A- 11 344 021
- US-B2- 6 904 996

## Description

The present invention refers to a gear shift system for a vehicle with a tiltable driver's cabin comprising an actuation lever operably mounted to the driver's cabin, a flexible control cable coupled to the actuation lever for transferring mechanical commands towards a gear box, and a cable guide arranged to guide the control cable.

In heavy vehicles such as trucks the main engine is often located beneath the driver's cabin. For the purpose of access for service and maintenance the driver's cabin is typically pivotally connected to the vehicle frame. The pivot axis between driver's cabin and vehicle frame is usually located in the very forward portion of the vehicle and is directed transversely with respect to the longitudinal direction of the vehicle. Thereby, the cabin can be tilted forwardly to give full access to the main engine.

It will be understood that this tilting mechanism poses problems for all units providing a communication between the driver's cabin and the rest of the vehicle. Especially, a mechanical communication such as it is needed to transfer shift commands from a manual actuation lever in the driver's cabin to the gear box located near the main engine is difficult to achieve with a tiltable driver's cabin.

It is known to solve this problem by decoupling the mechanical communication between the actuation lever and the gear box before the driver's cabin is tilted. This is very cumbersome as it includes further decoupling and recoupling steps before and after the access. Moreover, it requires an extra opening to access the mechanical communication.

It is also known in the prior art to use a flexible control cable, i.e. a Bowden cable with an inner cable in a cable sheath, transferring shift commands from the actuation lever to the gear box. The control cable is routed into the vicinity of the pivot axis between the driver's cabin and the vehicle frame and then towards the gear box. As the pivot axis between the driver's cabin and the vehicle frame is preferably located very forward in order to give full access to the main engine, the control cable is typically routed from the actuation lever parallel to the cabin floor forward in front of the cooler system, curved downwards and then directed backwards towards the gear box. When the driver's cabin is tilted relative to the vehicle frame the curved portion of the control cable is thereby able to adapt flexibly to the movement of the cabin. The portion of the control cable routed parallel to the cabin floor simply follows the pivot movement and does not need to change its position relative to the driver's cabin.

This solution has several disadvantages. Firstly, there is only very limited space in the very forward portion of the vehicle through which the control cable needs to be routed. Since there is a functional lower limit for the curvature radius the control cable requires a considerable amount of space in this very forward portion. Secondly, the length of the control cable is relatively large compared to the distance between the actuation lever and the gear box. The longer the control cable is the more frictional force needs to be overcome and the more material and working costs are involved with it. Thirdly, the very forward portion is hot due to the vicinity of the cooler and heat resistant material needs to be used for the control cable which also adds to the production costs.

An alternative solution is presented in US 6,904,996 B2. It is described therein to arrange the actuation lever in the dashboard of the driver's cabin such that the control cable is routed essentially vertically downward in the very forward portion of the cabin and then backwards below the cabin towards the gear box. Instead of a 180° curvature only a 90° curvature is needed and less cable length is needed with this solution.

However, it is often no option to arrange the actuation lever in the dashboard of the cabin. Most manufacturers have a determined design wherein the actuation lever is supposed to be connected to the cabin floor. Moreover, there is no space in the very forward portion of the cabin to place the actuation lever. Finally, most drivers prefer the ordinary bottom position of the actuation lever connected to the cabin floor which is often preferred for ergonomic reasons.

JP11344021A discloses a system according to the preamble of claim 1. It is the object of the present invention to provide an improved gear shift system for a vehicle with a tiltable driver's cabin overcoming the above-mentioned problems of the solutions known in the prior art.

This object is solved by the inventive gear shift system according to the features of claim 1. Preferred embodiments of the invention are subject of the dependent claims.

According to the present invention a gear shift system for a vehicle with a tiltable driver's cabin is provided comprising an actuation lever operably mounted to the driver's cabin, a flexible control cable coupled to the actuation lever for transferring mechanical commands towards a gear box, and a cable guide arranged to guide the control cable, characterised in that the cable guide is pivotally connected to the driver's cabin, such that the cable guide is able to pivot relative to the driver's cabin when the driver's cabin is tilted relative to the vehicle frame.

The actuation lever of the gear shift system may for example be a shift lever for transferring mechanical gear select or shift commands towards the gear box. Otherwise, the actuation lever may be a clutch actuator for transferring mechanical clutch engage or disengage commands towards the gear box. Although the preferred embodiments of the present invention discussed herein show the actuation lever only as a shift lever, it will be appreciated by a man skilled in the art that the actuation lever may as well be a clutch actuator.

Due to the fact that the cable guide of the inventive gear shift system is pivotally connected to the driver's cabin the cable length can be designed significantly shorter than in ordinary gear shift systems. The cable does not have to be routed through the hot and limited space in the very forward portion of the vehicle. The pivot connection prevents the cable from being bent in a sharp angle when the cabin is tilted. When the cabin floor lifts off the vehicle frame during tilting forward the cabin the pivot connection between the cable guide and the cabin ensures that the cable guide pivots downwards concertedly with the cabin tilting forward. Thereby, a shorter cable routing can be used without causing a sharp bending of the cable when tilting the cabin.

It will be appreciated that it is preferred if the pivot axis between the cable guide and the driver's cabin is essentially parallel to the tilting axis between the driver's cabin and the vehicle frame. The flexible control cable may be a tube of a hydraulic or pneumatic transmission system. It is, however, preferred that the flexible control cable is a Bowden cable comprising an inner cable and an outer cable sheath, wherein the cable sheath is connected to the cable guide and the inner cable is pivotally connected to a movable lever arm arranged to transfer shift commands from the actuation lever. Such a movable lever arm typically receives mechanical gear shift or select commands or clutch engage or disengage commands from the actuation lever and extends from a central joint mounting of the actuation lever essentially vertically downwards in parallel to the actuation lever axis.

Usually, there are two control cables needed to transfer shift and select commands, respectively, from the actuation lever to the gear box. Therefore, it is preferred that the inventive gear shift system comprises two control cables connected to the cable guide. The two cables may be routed separately or together through a common tubular flexible duct or sleeve towards the gear box.

In a preferred embodiment of the inventive gear shift system the cable guide is an elongate member adapted to receive at least one cable at one end and mounted with a pivot joint at its other end. Such an elongate cable guide member has the advantage that the downward pivoting of the cable guide compensates for the increasing distance between the cabin and the vehicle frame when the cabin is tilted. The cable length can be designed even shorter in this preferred embodiment. The cable guide member may comprise at least one lug to receive the cable sheath of the control cable. Preferably, there are two lugs each to receive the cable sheath of the gear shift cable and the gear select cable, respectively.

In the inventive gear shift system the actuation lever is operably mounted to the driver's cabin via an actuation lever bracket which is fixed to the driver's cabin; the cable guide is pivotally connected to the actuation lever bracket.

A preferred embodiment of the inventive gear shift system may also comprise a locking mechanism adapted to lock the cable guide in an operational position in which the longitudinal axis of the end portion of the control cable connected to the cable guide is substantially parallel to the floor of the driver's cabin. The operational position of the cable guide is usually the position when the longitudinal axis of the cable guide is essentially in a right angle with respect to the essentially vertical actuation lever axis when the cabin is not tilted. In this position the cable may bend downwards with a relatively large curvature towards the gear box which is located in the engine compartment beneath the cabin.

For the purpose of service, repair or maintenance access the locking mechanism may preferably be adapted to unlock the cable guide to allow a pivot movement relative to the driver's cabin when the driver's cabin is tilted relative to the vehicle frame.

Moreover, a preferred embodiment of the gear shift system may comprise a resilient element adapted to urge the cable guide towards an operational position when the driver's cabin is tilted relative to the vehicle frame. The resilient element may be a spring element. Furthermore, the resilient element may have a locking effect on the cable guide in a fully pivoted position of the cable guide when the driver's cabin is fully tilted relative to the vehicle frame.

In particular, a preferred gear shift system may comprise a crank arranged to pivot concertedly with the cable guide about the pivot axis of the cable guide with an angular offset and adapted to apply a force on the resilient element when the cable guide is pivoted relative to the driver's cabin from an initial position to a fully pivoted position. A connecting rod may be hinged to the crank and arranged to load the resilient element, wherein the resilient force causes the locking effect when the crank essentially reaches a dead centre and the cable guide is fully pivoted. The locked fully pivoted position of the cable guide when the driver's cabin is fully tilted is advantageous for service, maintenance and repair of the gear shift system. Furthermore, there is no lateral tension applied to the control cable by the cable guide when it is fully pivoted.

In the following a preferred embodiment of the invention is discussed in further detail with reference to the accompanying figures.
Fig. 1 shows a side view of a mounted preferred embodiment of the inventive gear shift system with a cable guide in an operational state and a fully pivoted state.
Fig. 2 shows a side view of a preferred embodiment of the inventive gear shift system with a cable guide in an operational state.
Fig. 3 shows a side view of a preferred embodiment of the inventive gear shift system with a cable guide in a fully pivoted state when the driver's cabin is fully tilted.
Fig. 4 shows a detailed side view of a preferred embodiment of the inventive gear shift system with a cable guide in an operational state.
Fig. 5 shows a detailed side view of a preferred embodiment of the inventive gear shift system with a cable guide in a fully pivoted state.
Fig. 6 shows a detailed perspective view of a preferred embodiment of the inventive gear shift system with a cable guide in an operational state.
Fig. 7 shows a detailed perspective view of a preferred embodiment of the inventive gear shift system with a cable guide in a fully pivoted state.
Figs. 8 to 11 show a more detailed side view of a preferred embodiment of the inventive gear shift system with a cable guide in four different states.
Figs. 12 and 13 show a more detailed perspective view of a preferred embodiment of the inventive gear shift system with a cable guide in an operational state and a fully pivoted state, respectively.

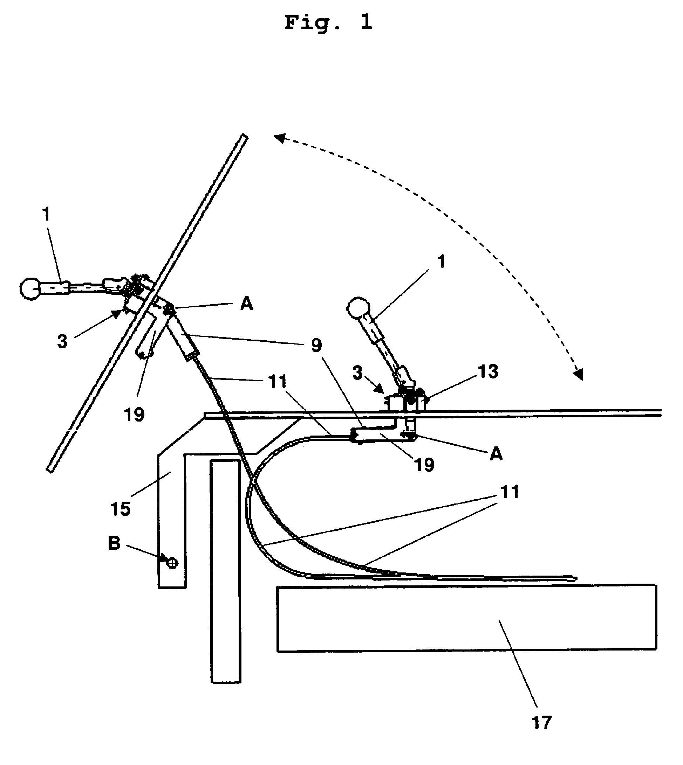

A preferred embodiment of the inventive gear shift system is shown in Fig. 1 mounted in a vehicle, wherein only selected parts of the vehicle are shown to allow view on the inventive gear shift system. The gear shift system is shown in two positions, i.e. an operational position in which the driver's cabin (not shown) is not tilted and a tilted position in which the driver's cabin is fully tilted forward.

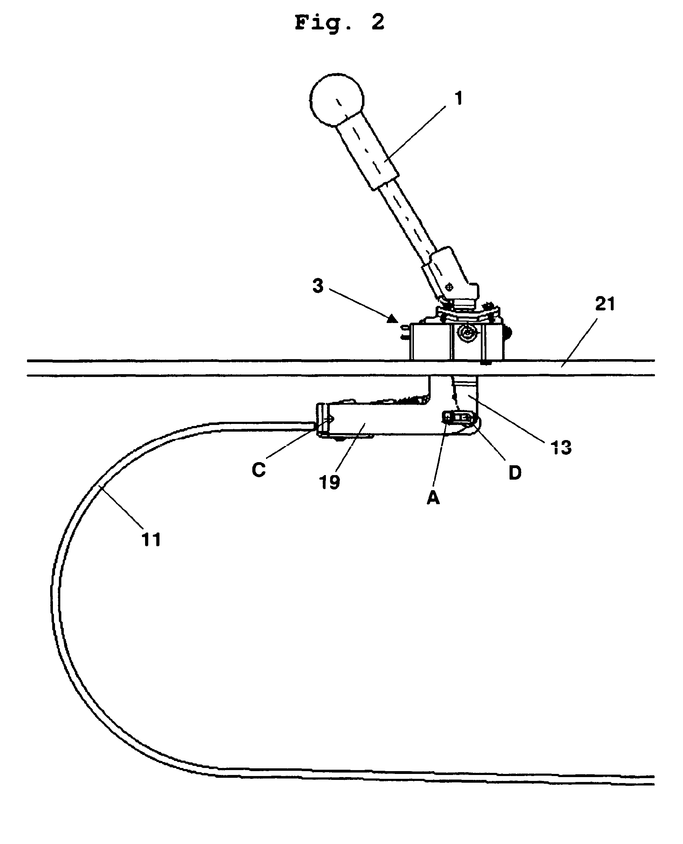

The gear shift system comprises an actuation lever 1 which is operably mounted to the cabin floor 21 via an actuation lever bracket 3 (see Fig. 2). The actuation lever bracket 3 is fixed to the cabin floor 21 and extends downwards through an opening in the cabin floor 21 to provide a pivot joint with a pivot axis A directed horizontally and transversally with respect to the longitudinal axis of the vehicle. Beneath the cabin floor 21 an elongate cable guide member 9 is pivotally connected to the pivot joint provided by the actuation lever bracket 3. Two cables 11, one for transferring gear shift commands and one for transferring gear select commands, are connected each with one end portion to the cable guide 9. The control cables 11 are routed essentially parallel to each other essentially in a half circle with a relatively large curvature downwards into the engine compartment and finally backwards towards a gear box (not shown). In the operational state of the cable guide 9 the end portions of the cables 11 connected to the cable guide 9 are directed essentially horizontally and parallel to the cabin floor 21.

The gear shift system further comprises two movable lever arms 13 extending essentially coaxially to the actuation lever 1 downwards through the opening in the cabin floor 21. These movable lever arms 13 are provided to transfer the gear select and gear shift commands, respectively, of the actuation lever 1. The cables 11 are Bowden cables with an inner cable and a cable sheath, wherein the inner cables of the gear select cable 11 and gear shift cable 11 are connected to the one and the other movable lever arm 13, respectively. The cable sheaths of both the gear select cable 11 and the gear shift cable 11 are connected to the cable guide 9.

The driver's cabin is mounted on a cabin suspension bracket 15 which is spring mounted to the vehicle frame 17 and pivotally connected to it. The cabin suspension bracket 15 is shown in Fig. 1 in an operational position only, in which the cabin is in an operational untilted position with an essentially horizontally positioned cabin floor 21. The pivot axis B between the cabin suspension bracket 15 and the vehicle frame 17 is located in the very forward portion of the vehicle and directed essentially horizontally transversely with respect to the longitudinal axis of the vehicle such that the driver's cabin can be tilted forward to allow an access to the engine compartment underneath for reasons of service, repair or maintenance.

In the fully tilted position of the cabin the actuation lever 1 which is operably mounted to the cabin floor 21 takes the tilted position shown in Fig. 1. In this position all parts that are fixed to the cabin including the actuation lever 1 and the actuation lever bracket 3 are rotated forward about the pivot axis B for about 60°. The cable guide 9, however, has performed an additional concerted pivot movement relative to the actuation lever bracket 3 about the pivot axis A in the same direction as the cabin about pivot axis B. This concerted pivot movement significantly compensates for the increased distance the control cables 11 have to bridge due to the fully tilted position of the cabin. Thereby, the pivot connection between the cable guide 9 and the actuation lever bracket 3 significantly saves cable length, because in order to provide for enough cable supply to bridge the increased distance the cable length would have to be longer if the cable guide 9 was fixed to the actuation lever bracket 3. Furthermore, the cables 11 are not bent in a sharp angle and need not to be routed through the hot and limited space in the vicinity of the cooler (not shown).

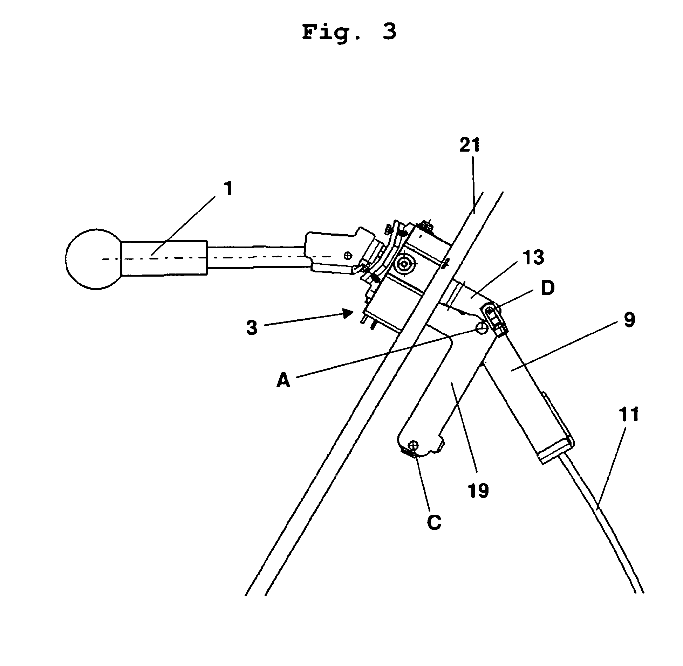

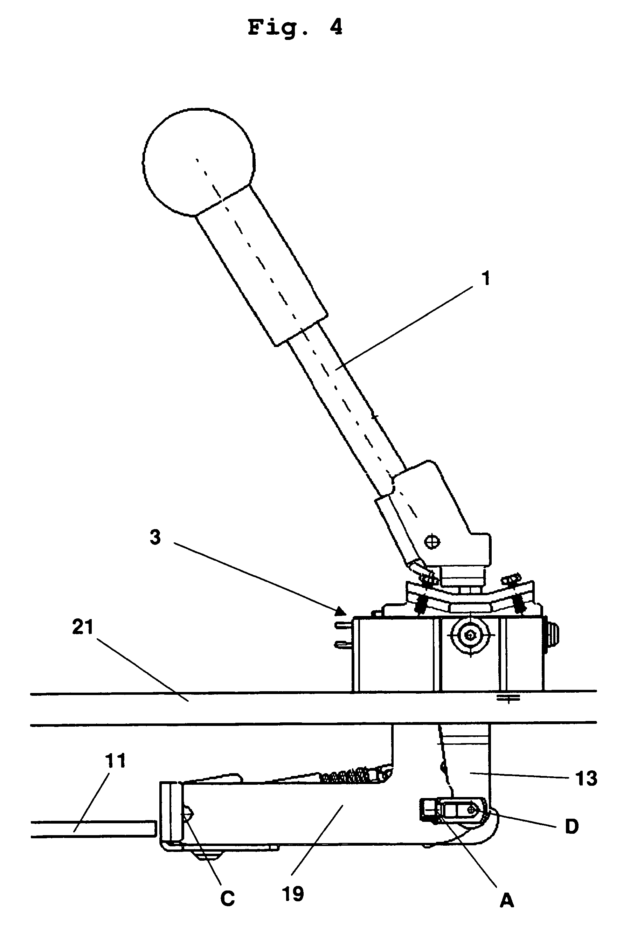

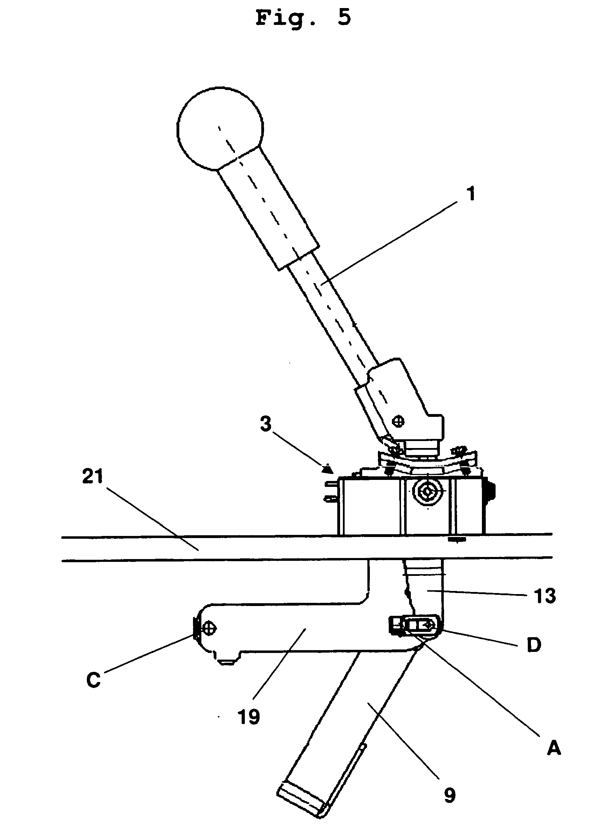

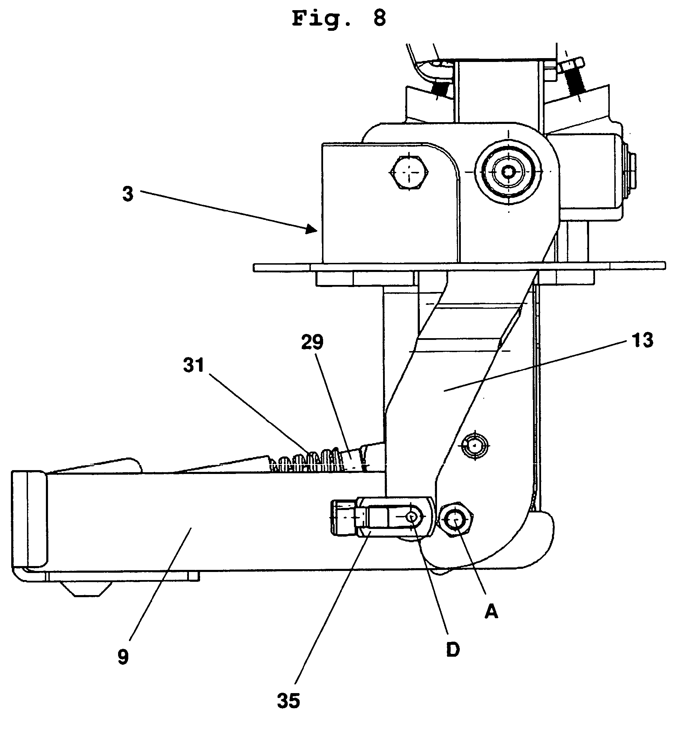

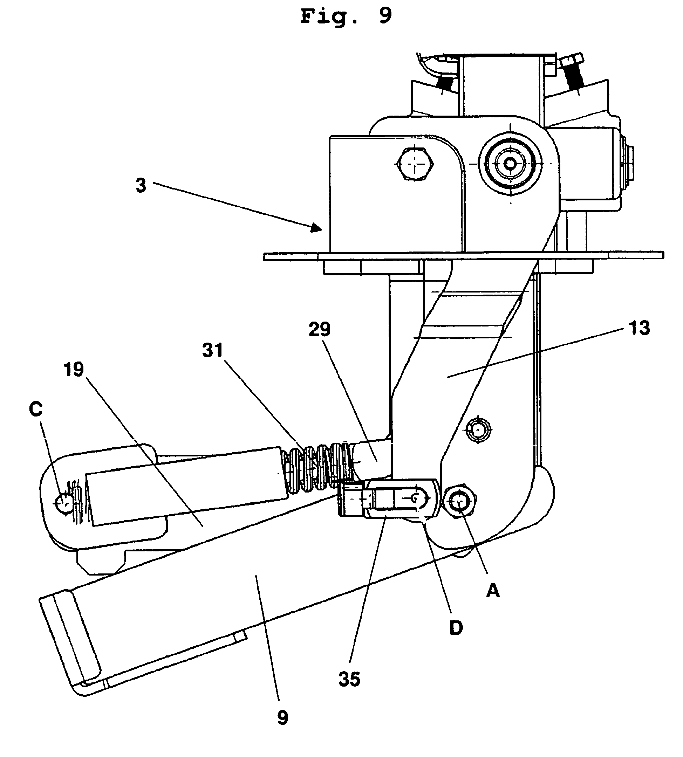

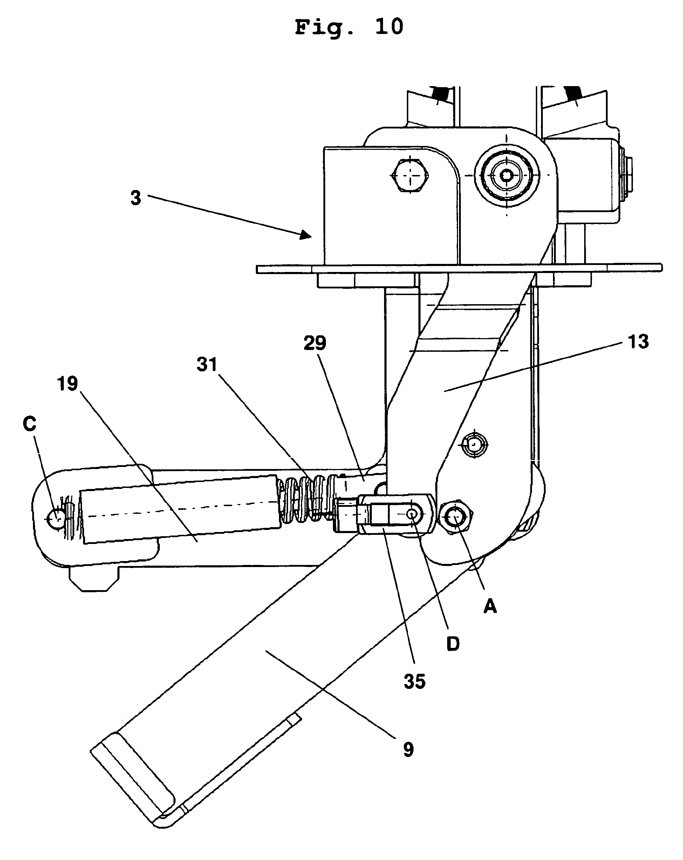

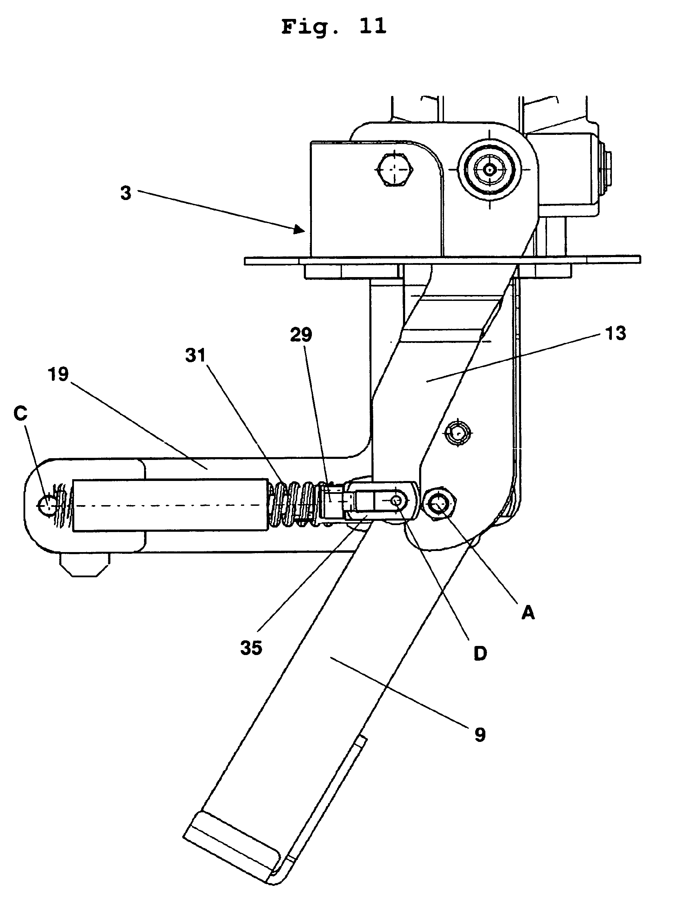

Figs. 2 and 3 show the preferred embodiment of the inventive gear shift system without the surrounding parts of the vehicle it is mounted to in the two states separately. It can be seen that the actuation lever bracket 3 has an elongate portion 19 which extends forward essentially parallel to the cabin floor 21 and in a right angle from the downward extension providing the pivot joint. The elongate portion 19 has essentially the same length as the cable guide 9 which is hidden behind the elongate portion 19 in Fig. 2. In Fig. 3 the cable guide 9 is visible in a fully pivoted state with respect to the actuation lever bracket 3 and the cabin floor 21. Figs. 4 and 5 give a more detailed view on the gear shift system with the cable guide 9 in the respective states without the cables 11 attached to it. The function of the elongate portion 19 is explained in Figs. 8 to 11.

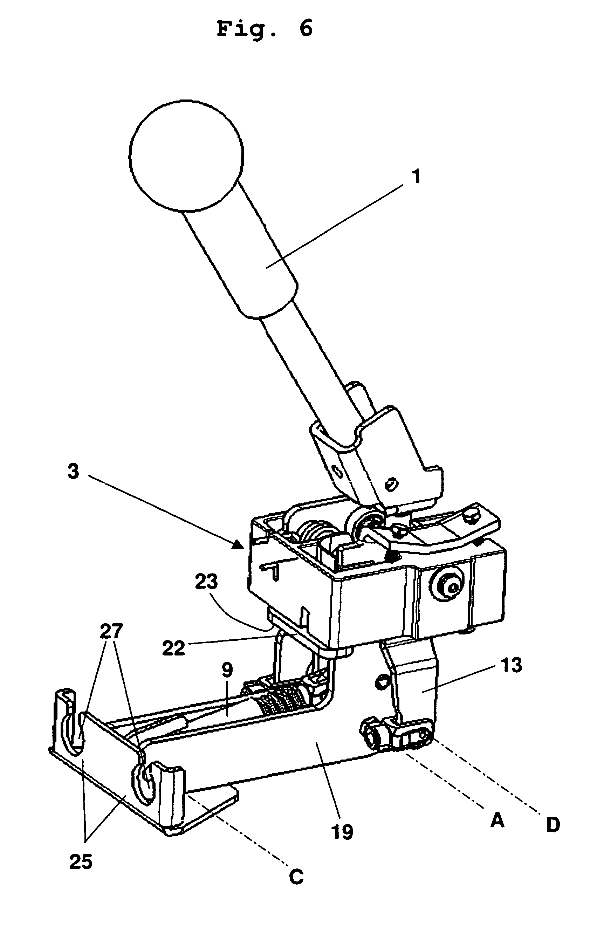

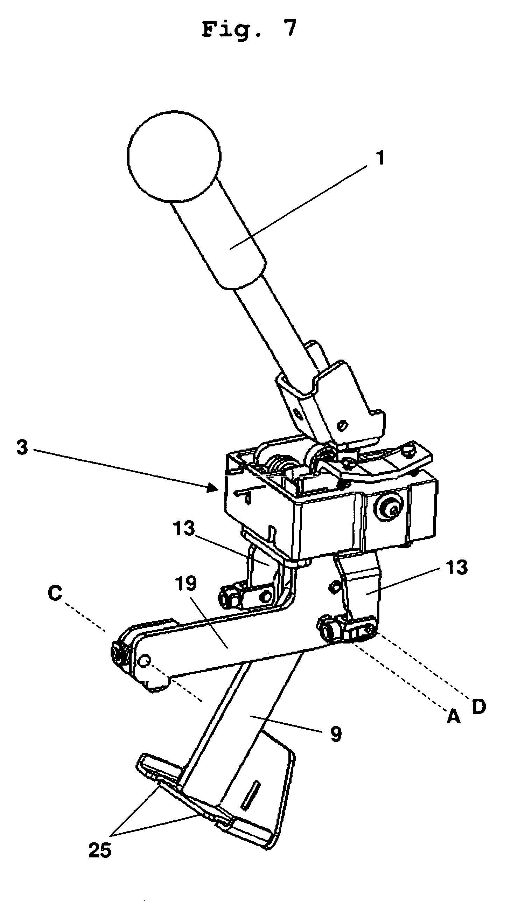

Figs. 6 and 7 give a better view on the connection between the different parts of the system. The actuation lever bracket 3 comprises a flange 22 with bores 23 by which the actuation lever bracket 3 can be fixed to the cabin floor 21 by screws or bolts. The elongate cable guide member 9 has essentially the shape of a T-piece comprising two lateral arms 25 having a lug 27 each to receive the cable sheath of a control cable 11. The control cables 11 are not shown, but it will be appreciated that the inner cable of each control cable 11 protrudes through the end portion of the cable sheath connected to the lug 27 towards one of the movable lever arms 13 to which the inner cable is connected to. In the perspective views of Figs. 6 and 7 there is only one of the two movable lever arms 13 visible.

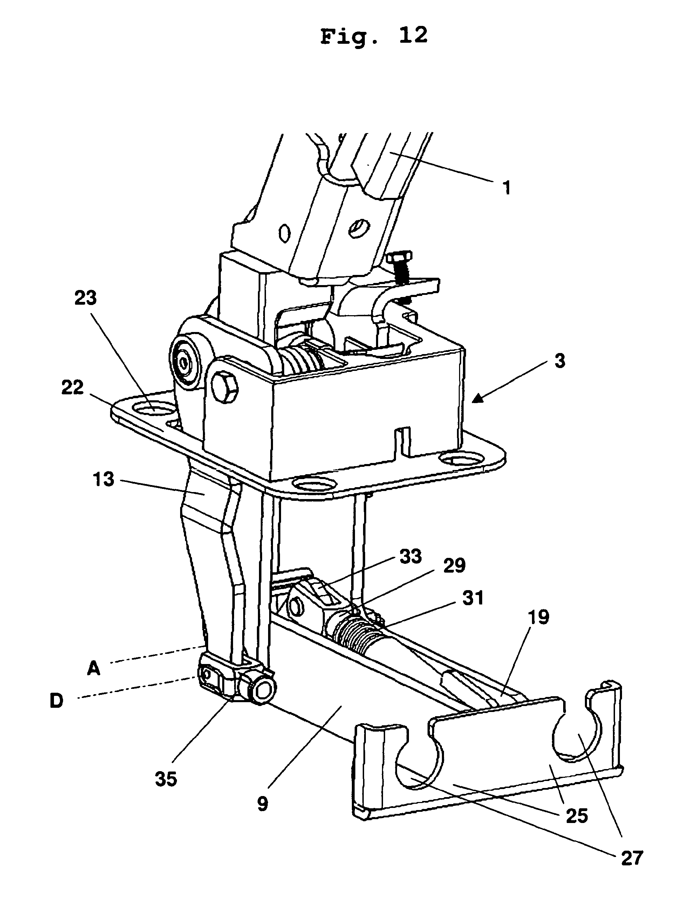

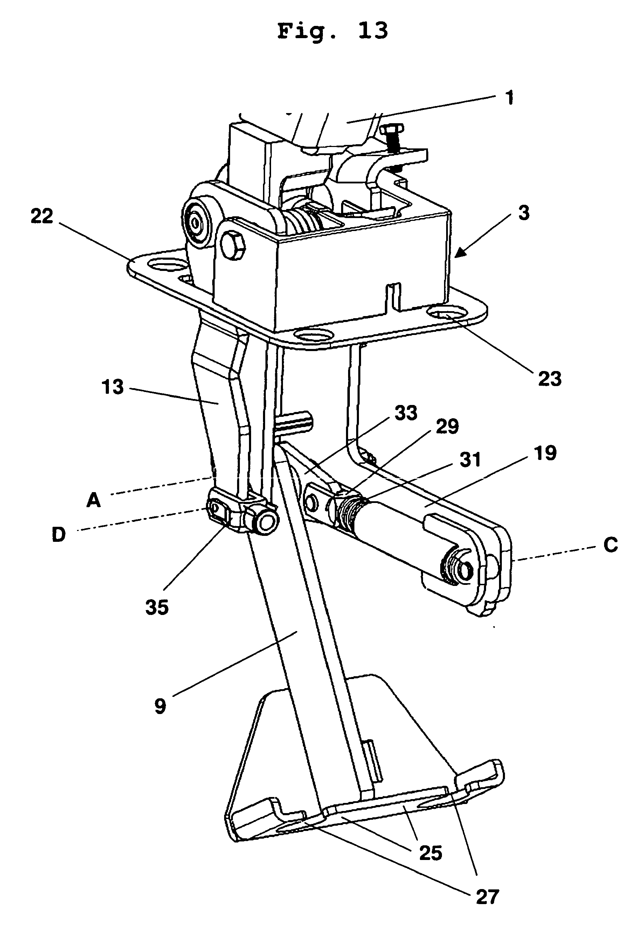

The locking mechanism comprised in the preferred embodiment of the gear shift system may be explained in Figs. 8 to 13. The locking mechanism comprises a connecting rod 29 which is connected pivotally about a pivot axis C to the end portion of elongate portion 19 of the actuation lever bracket 3, wherein the pivot axis C is parallel to the pivot axis A. The connecting rod 29 is spring mounted by a spring 31 such that the spring 31 is compressed when the connecting rod 29 is moved logitudinally towards the pivot axis C. It can be seen in Figs. 12 and 13 that the connecting rod 29 is hinged to a crank 33 which is fixed to the cable guide 9 and pivots concertedly which it about pivot axis A. There is an angular offset between the elongate cable guide member 9 and the crank 33 such that the connecting rod 29 is positioned with an angle relative to the elongate portion 19 of the actuation lever bracket 3 when the cable guide 9 is in an operational position shown in Figs. 2, 4, 6, 8 and 12. In this position the spring 31 is already preloaded such that the crank 33 is biased by the resilient force of the spring 31 against a stopper bolt 35 preventing the crank 33 and the cable guide 9 to be rotated by the resilient force. Thereby, a locking effect is achieved such that the cable guide 9 is locked in an operational position in which the longitudinal axis of the end portion of the control cable 11 connected to the cable guide 9 is substantially parallel to the floor 21 of the driver's cabin. The crank 33 and the cable guide 9 are in this position only able to pivot downwards and against the resilient force of the spring 31. It can be seen in Figs. 8 to 11 how the connecting rod 29 is urged towards the pivot axis C by the crank 33 to compress the spring 31 as the cable guide 9 is pivoted downwards when the driver's cabin is tilted forward. In a fully pivoted state of the cable guide 9 as shown in Figs. 3, 5, 7 , 11 and 13, the connecting rod 29 has reached a position essentially parallel to the elongate portion 19 of the actuation lever bracket 3. In this fully pivoted state the crank 33 has essentially reached a dead centre. The spring 31 is maximally compressed but the resilient force causes essentially no turning moment on the crank 33 as the lever arm is essentially zero. This situation can be used to cause a locking effect. For example, there could be stopper means (not shown) allowing the crank 33 and/or the cable guide 9 to be pivoted only a very small angle beyond the dead centre. The resilient force then causes a turning moment on the crank 33 and locks the cable guide 9 in the fully pivoted state by urging the crank 33 and/or the cable guide 9 against the stopper means.

Figs. 8 to 13 also show the connector means 35 for connecting the inner cable of the control cables 11 to the movable lever arms 13 for transferring shift and select commands form the actuation lever 1. The U-shaped connector means 35 encompass the movable lever arm 13 and is connected to it pivotably about a pivot axis D parallel to pivot axis A. The inner cable of a control cable 11 is connectable to the connector means 35 such that a shift or select command from the actuation lever 1 can be transferred to the inner cable of a control cable 11.

The pivot connection via the connector means 35 make sure that the inner cable is not bent in a sharp angle when the cable guide 9 is pivoted. Furthermore, the inner cable of the control cable 11 can follow more easily the gear shift or select movements of the movable lever arms 13.

## Claims

1. A gear shift system for a vehicle with a tiltable driver's cabin comprising an actuation lever (1) operably mounted to the driver's cabin, a flexible control cable (11) coupled to the actuation lever (1) for transferring mechanical commands towards a gear box, and a cable guide (9) arranged to guide the control cable (11), wherein the cable guide (9) is pivotally connected to the driver's cabin, such that the cable guide (9) is able to pivot relative to the driver's cabin when the driver's cabin is tilted relative to the vehicle frame (17),
**characterised in that**
the actuation lever (1) is operably mounted, to the driver's cabin via an actuation lever bracket (3) which is fixed to the driver's cabin, and that the cable guide (9) is pivotally connected to the actuation lever bracket (3).

2. A gear shift system according to claim 1, wherein the pivot axis (A) between the cable guide (9) and the driver's cabin is essentially parallel to the tilting axis (B) between the driver's cabin and the vehicle frame (17).

3. A gear shift system according to claim 1 or 2, wherein the control cable (11) is a Bowden cable comprising an inner cable and an outer cable sheath, wherein the cable sheath is connected to the cable guide (9) and the inner cable is pivotally connected to a movable lever arm (13) arranged to transfer mechanical commands from the actuation lever (1).

4. A gear shift system according to any preceding claim, wherein the cable guide (9) is an elongate member adapted to receive at least one cable (11) at one end and mounted with a pivot joint at its other end.

5. A gear shift system according to claim 4, wherein the cable guide member (9) comprises at least one lug (27) to receive the cable sheath of the control cable (11).

6. A gear shift system according to any of the preceding claims, wherein the gear shift system comprises a locking mechanism adapted to lock the cable guide (9) in an operational position in which the longitudinal axis of the end portion of the control cable (11) connected to the cable guide (9) is substantially parallel to the floor (21) of the driver's cabin.

7. A gear shift system according to claim 6, wherein the locking mechanism is adapted to unlock the cable guide (9) to allow a pivot movement relative to the driver's cabin when the driver's cabin is tilted relative to the vehicle frame (17).

8. A gear shift system according to any of the preceding claims, wherein the gear shift system comprises a resilient element (31) adapted to urge the cable guide (9) towards an operational position when the driver's cabin is tilted relative to the vehicle frame (17).

9. A gear shift system according to claim 8, wherein the resilient element (31) is a spring element (31).

10. A gear shift system according to claim 8 or 9, wherein the resilient element (31) has a locking effect on the cable guide (9) in a fully pivoted position of the cable guide (9) when the driver's cabin is fully tilted relative to the vehicle frame (17).

11. A gear shift system according to any of the claims 8 to 10, wherein the gear shift system comprises a crank (33) arranged to pivot concertedly with the cable guide (9) about the pivot axis (A) of the cable guide (9) with an angular offset and adapted to apply a force on the resilient element (31) when the cable guide (9) is pivoted relative to the driver's cabin from an initial position to a fully pivoted position.

12. A gear shift system according to claim 11, wherein a connecting rod (29) is hinged to the crank (33) and arranged to load the resilient element (31), wherein the resilient force causes a locking effect when the crank (33) essentially reaches a dead centre and the cable guide (9) is fully pivoted.

## Patentansprüche

1. Gangschaltungssystem für ein Fahrzeug mit einer schwenkbaren Fahrerkabine mit einem Betätigungshebel (1), der betriebsmäßig an der Fahrerkabine angebracht ist, einem flexiblen Steuerkabel (11), das mit dem Betätigungshebel (1) verbunden ist, um mechanische Befehle zu einem Getriebe zu übertragen, und einer Kabelführung (9), die dazu ausgestaltet ist, um das Steuerkabel (11) zu führen, wobei die Kabelführung (9) schwenkbar an der Fahrerkabine angebracht ist, so dass die Kabelführung (9) dazu in der Lage ist, relativ zu der Fahrerkabine zu schwenken, wenn die Fahrerkabine relativ zu dem Fahrzeugrahmen (17) geschwenkt wird,
**dadurch gekennzeichnet, dass**
der Betätigungshebel (1) über einen Betätigungshebelhalter (3), der an der Fahrerkabine befestigt ist, betriebsmäßig an der Fahrerkabine angebracht ist, und dass die Kabelführung (9) schwenkbar mit dem Betätigungshebelhalter (3) verbunden ist.

2. Gangschaltungssystem nach Anspruch 1, wobei die Schwenkachse (A) zwischen der Kabelführung (9) und der Fahrerkabine im Wesentlichen parallel zu der Schwenkachse (B) zwischen der Fahrerkabine und dem Fahrzeugrahmen (17) liegt.

3. Gangschaltungssystem nach Anspruch 1 oder 2, wobei das Steuerkabel (11) ein Bowden-Zug mit einem inneren Seil und einer äußeren Kabelhülle ist, wobei die Kabelhülle mit der Kabelführung (9) verbunden ist und das innere Seil schwenkbar mit einem beweglichen Hebelarm (13) verbunden ist, der dazu ausgestaltet ist, um mechanische Befehle von dem Betätigungshebel (1) zu übertragen.

4. Gangschaltungssystem nach einem der vorhergehenden Ansprüche, wobei die Kabelführung (9) ein längliches Element ist, das dazu ausgestaltet ist, um wenigstens ein Kabel (11) an einem Ende aufzunehmen, und das mit einer Schwenkverbindung an seinem anderen Ende gelagert ist.

5. Gangsschaltungssystem nach Anspruch 4, wobei das Kabelführungselement (9) wenigstens eine Öffnung (27) zum Aufnehmen der Kabelhülle des Steuerkabels (11) aufweist.

6. Gangschaltungssystem nach einem der vorhergehenden Ansprüche, wobei das Gangschaltungssystem einen Verschlussmechanismus aufweist, der dazu angepasst ist, um die Kabelführung (9) in einer Betriebsstellung festzusetzen, in der die Längsachse des mit der Kabelführung (9) verbundenen Endbereichs des Steuerkabels (11) im Wesentlichen parallel zum Boden (21) der Fahrerkabine liegt.

7. Gangschaltungssystem nach Anspruch 6, wobei der Verschlussmechanismus dazu angepasst ist, um die Kabelführung (9) freizugeben, um eine Schwenkbewegung relativ zu der Fahrerkabine zu ermöglichen, wenn die Fahrerkabine relativ zu dem Fahrzeugrahmen (17) geschwenkt wird.

8. Gangschaltungssystem nach einem der vorhergehenden Ansprüche, wobei das Gangsschaltungssystem ein elastisches Element (31) aufweist, das dazu angepasst ist, um die Kabelführung (9) in Richtung einer Betriebsstellung zu drücken, wenn die Fahrerkabine relativ zu dem Fahrzeugrahmen (17) geschwenkt wird.

9. Gangschaltungssystem nach Anspruch 8, wobei das elastische Element (31) ein Federelement (31) ist.

10. Gangschaltungssystem nach Anspruch 8 oder 9, wobei das elastische Element (31) eine Verschlusswirkung auf die Kabelführung (9) in einer vollständig geschwenkten Stellung der Kabelführung (9) hat, wenn die Fahrerkabine vollständig relativ zu dem Fahrzeugrahmen (17) geschenkt ist.

11. Gangschaltungssystem nach einem der Ansprüche 8 bis 10, wobei das Gangschaltungssystem einen Hebel (33) aufweist, der dazu ausgestaltet ist, um gemeinsam mit der Kabelführung (9) um die Schwenkachse (A) der Kabelführung (9) in einem versetzten Winkel zu schwenken, und dazu angepasst ist, um eine Kraft auf das elastische Element (31) auszuüben, wenn die Kabelführung (9) relativ zu der Fahrerkabine aus einer Ausgangsstellung in eine voll verschwenkte Stellung geschwenkt wird.

12. Gangsschaltungssystem nach Anspruch 11, wobei eine Verbindungsstange (29) an dem Hebel (33) angelenkt ist und dazu ausgestaltet ist, das elastische Element (31) zu belasten, wobei die elastische Kraft eine Verschlusswirkung bewirkt, wenn der Hebel (33) im Wesentlichen einen Totpunkt erreicht und die Kabelführung (9) vollständig geschwenkt ist.

## Revendications

1. Système de changement de vitesse pour un véhicule équipé d'une cabine de conducteur basculante, comprenant un levier d'actionnement (1) monté fonctionnellement sur la cabine de conducteur, un câble de commande (11) flexible, couplé au levier d'actionnement (1), pour transférer des commandes mécaniques vers une boîte de vitesses, et un guide-câble (9), agencé pour guider le câble de commande (11), dans lequel le guide-câble (9) est relié à pivotement à la cabine de conducteur, de manière que le guide-câble (9) soit en mesure de pivoter par rapport à la cabine de conducteur lorsque cette cabine de conducteur est basculée par rapport au châssis de véhicule (17),
**caractérisé en ce que**
le levier d'actionnement (1) est monté fonctionnellement sur la cabine de conducteur via un support de levier d'actionnement (3) fixé à la cabine de conducteur, et **en ce que** le guide-câble (9) est relié à pivotement au support de levier d'actionnement (3).

2. Système de changement de vitesse selon la revendication 1, dans lequel l'axe de pivotement (A) entre le guide-câble (9) et la cabine de conducteur est sensiblement parallèle à l'axe de basculement (B) entre la cabine de conducteur et le châssis de véhicule (17).

3. Système de changement de vitesse selon la revendication 1 ou 2, dans lequel le câble de commande (11) est un câble de Bowden, comprenant un câble intérieur et une gaine de câble extérieure, dans lequel la gaine de câble est reliée au guide-câble (9) et le câble intérieur est relié à pivotement à un bras de levier (13) déplaçable, agencé pour transférer des commandes mécaniques à partir du levier d'actionnement (1).

4. Système de changement de vitesse selon l'une quelconque des revendications précédentes, dans lequel le guide-câble (9) est un organe allongé, adapté pour recevoir au moins un câble (11) à une extrémité et monté avec une articulation à pivot à son autre extrémité.

5. Système de changement de vitesse selon la revendication 4, dans lequel l'organe formant guide-câble (9) comprend au moins une patte (27), pour recevoir la gaine de câble du câble de commande (11).

6. Système de changement de vitesse selon l'une quelconque des revendications précédentes, dans lequel le système de changement de vitesse comprend un mécanisme de verrouillage adapté pour verrouiller le guide-câble (9) en une position fonctionnelle dans laquelle l'axe longitudinal de la partie d'extrémité du câble de commande (11) relié au guide-câble (9) est sensiblement parallèle au plancher (21) de la cabine de conducteur.

7. Système de changement de vitesse selon la revendication 6, dans lequel le mécanisme de verrouillage est adapté pour déverrouiller le guide-câble (9), pour permettre d'accomplir un mouvement de pivotement par rapport à la cabine de conducteur lorsque cette cabine de conducteur est basculée par rapport au châssis de véhicule (17).

8. Système de changement de vitesse selon l'une quelconque des revendications précédentes, dans lequel le système de changement de vitesse comprend un élément élastique (31), destiné à solliciter le guide-câble (9) vers une position fonctionnelle lorsque la cabine de conducteur est basculée par rapport au châssis de véhicule (17).

9. Système de changement de vitesse selon la revendication 8, dans lequel l'élément élastique (31) est un ressort (31).

10. Système de changement de vitesse selon la revendication 8 ou 9, dans lequel l'élément élastique (31) exerce un effet de verrouillage sur le guide-câble (9) en une position complètement pivotée du guide-câble (9), lorsque la cabine de conducteur est complètement basculée par rapport au châssis de véhicule (17).

11. Système de changement de vitesse selon l'une quelconque des revendications 8 à 10, dans lequel le système de changement de vitesse comprend une manivelle (33), agencée pour pivotée de concert avec le guide-câble (9) autour de l'axe de pivotement (A) du guide-câble (9) avec un décalage angulaire et adaptée pour appliquer une force sur l'élément élastique (31) lorsque le guide-câble (9) est pivoté par rapport à la cabine de conducteur, d'une position initiale à une position complètement pivotée.

12. Système de changement de vitesse selon la revendication 11, dans lequel une bielle (29) est montée de manière articulée sur la manivelle (33) et agencée pour charger l'élément élastique (31), dans lequel la force élastique provoque un effet de verrouillage lorsque la manivelle (33) atteint pratiquement un point mort et que le guide-câble (9) est complètement pivoté.
